# EUROPEAN PATENT SPECIFICATION

(11) **EP 3 932 267 B1**
(45) Date of publication and mention of the grant of the patent: **26.06.2024**
(21) Application number: 21193296.7
(22) Date of filing: 12.12.2019
(51) Int. Cl.: A47J 27/21, A47J 27/212

(54) **ELECTRIC POT HAVING IMPROVED FUNCTION OF CONTINUING THERMAL-INSULATION OPERATION**
ELEKTRISCHER TOPF MIT VERBESSERTER FUNKTION DES BETRIEBS MIT KONTINUIERLICHER WÄRMEISOLIERUNG
POT ÉLECTRIQUE DOTÉ D'UNE FONCTION AMÉLIORÉE DE FONCTIONNEMENT D'ISOLATION THERMIQUE EN CONTINU

(30) Priority: 14.12.2018 KR 20180162477
(43) Date of publication of application: 05.01.2022
(62) Divisional of application: 19215505.9
(73) Proprietor: LG Electronics Inc., Seoul 07336 (KR)
(72) Inventor: KIM, Namhun, Seoul 08592 (KR); JANG, Ho Yong, Seoul 08592 (KR)
(74) Representative: Ter Meer Steinmeister & Partner

(56) References cited:
- WO-A2-2008/155538
- US-A1- 2011 265 562
- US-A1- 2012 091 117

## Description

### BACKGROUND

### 1. Field

The present disclosure relates to an electric pot having an improved function of continuing a thermal-insulation operation.

### 2. Background

In general, an electric pot is an apparatus that may boil fluids such as water and that may keep the fluids warm. The electric pot is also an apparatus that may boil water more readily than a gas stove. Accordingly, the pot may be used to boil water for coffee or tea. Additionally, the electric pot may be used for various purposes. For example, the electric pot may be used to cook ramyeon noodles, to heat soup, stew, and the like, to steam food, and the like.

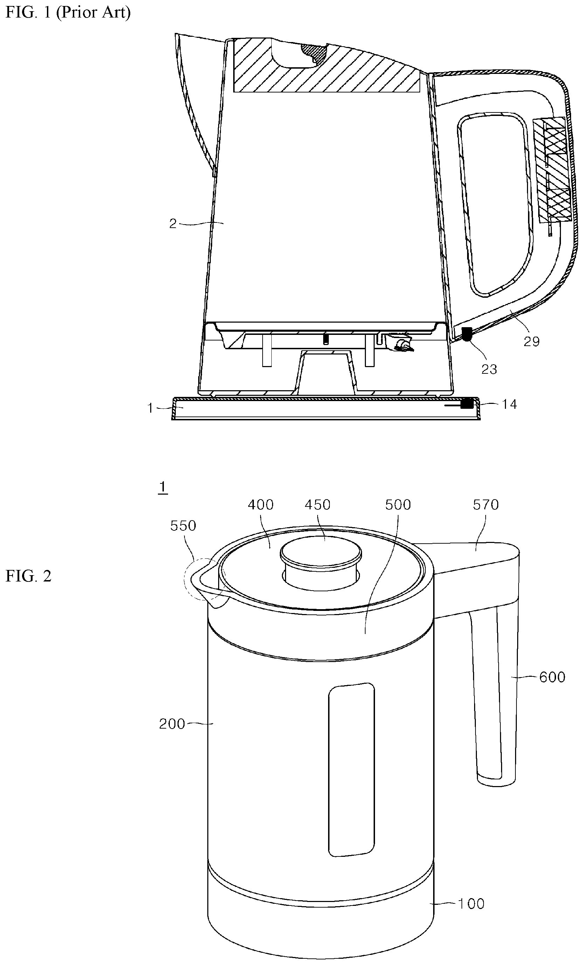

FIG. 1 shows an electric pot of the related art. With reference to FIG. 1, the electric pot of the related art is described. FIG. 1 is a cross-sectional view illustrating an electric pot of the related art. FIG. 1 is a drawing disclosed in U.S. Publication No. 2012-0091117A1, and reference numerals in FIG. 1 are limitedly applied to FIG. 1.

Referring to FIG. 1, the electric pot of the related art includes a base 1 and a body 2 that are detachably coupled to each other. The body 2 accommodates contents (e.g., water or drinks and the like) therein, and a handle 29 is coupled to one side of the body 2. Accordingly, a user may tilt the body 2 using the handle 29 to pour the contents contained in the body 2 into a cup and the like.

The body 2 may receive electric power from the base 1 through a coupling with the base 1, and may drive a heater provided in the body 2 using the received electric power. When the user provides an input in relation to an initiation (i.e., a start) of a thermal-insulation operation to the electric pot, a temperature of the contents contained in the body 2 may be maintained at a certain temperature level for a certain period of time. When the user separates the body 2 from the base 1, the thermal-insulation operation is stopped while electric power being supplied to the body 2 is cut off.

According to the related art, when the thermal-insulation operation is stopped due to the separation of the body 2 and the base 1, the thermal-insulation operation is not resumed even though the user re-couples the body 2 and the base 1.

That is, even when the user turns on the electric pot after re-coupling the body 2 and the base 1, the thermal-insulation operation that was being performed before the separation is not resumed. In this case, the user is required to re-set a thermal-insulation operation. This is a cumbersome procedure for the user.

Suppose that the user uses the electric pot two or more times per day to make tea (e.g., leaves soaked in hot water). According to the related art, the user uses the electric pot once, and, when the user re-uses the electric pot after a while (i.e., when the user wants to re-use the electric pot to make tea by soaking leaves in hot water), the user is required to re-set a thermal-insulation operation of the electric pot and to wait for a certain time. This is a cumbersome procedure for the user.

WO 2008/155538 A2 presents a liquid heating vessel and control. The liquid heating vessel includes an electronic control arranged to perform one or more of: boil or sub-boil temperature detection and/or control; volume/level detection; ultrasonic scale detection and/or inhibition; determining a usage efficiency rating; self-descaling; lighting control. Various advantageous illumination arrangements are provided. A halogen lamp may be used as a keep warm heater. Multiple halogen lamps may be controlled so as to provide variable heating and lighting.

### SUMMARY

The present disclosure is directed to providing an electric pot that may have an improved function of continuing a thermal-insulation operation, i.e. temperature-maintenance operation.

Additionally, the present disclosure is directed to providing an electric pot that may reduce the risk of fires and the risk of burns which may occur when a thermal-insulation operation is performed.

Objectives of the present disclosure are not limited to what has been described. Additionally, other objectives and advantages that have not been mentioned may be clearly understood from the following description and may be more clearly understood from embodiments.

The object is solved by the features of the independent claim 1. Preferred embodiments are given in the dependent claims.

An electric pot according to the invention comprises: a supporter configured to receive electric power from a power supply; a pot main body detachably coupled to an upper end of the supporter, the pot main body is configured to be operated by electric power received from the supporter, the pot main body includes a heater for heating contents accommodated in the pot main body and a temperature sensor for measuring a temperature of the contents; an input part configured to receive an input in relation to a temperature-maintenance operation of the contents and/or an input for driving of the heater from a user; a controller configured to receive the input in relation to a temperature-maintenance operation from the input part, and to receive information on a temperature of the contents from the temperature sensor, and to control the heater based on the received input in relation to a temperature-maintenance operation and based on the received information on a temperature of the contents to perform the temperature-maintenance operation; and a memory configured to receive information in relation to a temperature-maintenance operation from the controller and to store the information, and to retain the stored information in relation to a temperature-maintenance operation regardless of whether the pot main body is attached to and detached from the supporter, wherein, when the pot main body is separated from the supporter in a state in which the temperature-maintenance operation is initiated, the controller is configured to stop the temperature-maintenance-operation, to stop counting of the entire temperature-maintenance-continuation period, to update the information in relation to a temperature-maintenance operation, and to provide the updated information to the memory at the time of separation; and wherein, when the pot main body separated from the supporter is re-coupled to the supporter, the controller is configured to determine whether to re-initiate the temperature-maintenance operation based on the updated information.

Preferably, the input in relation to a thermal-insulation operation may include at least one of an input regarding whether to initiate the thermal-insulation operation, regarding a target setting temperature, and regarding an entire thermal-insulation-continuation period, i.e. temperature-maintenance operation.

Preferably, the information in relation to a thermal-insulation operation may include at least one of an information on whether the thermal-insulation operation is set, on the target setting temperature, and on a remaining thermal-insulation-continuation period of the entire thermal-insulation-continuation period.

Preferably, the controller may update the information in relation to a thermal-insulation operation, preferably in every predetermined cycle, until the entire thermal-insulation-continuation period is over, and/or may provide the updated information to the memory.

Preferably, when the supporter and the pot main body are separated, the controller may update the information in relation to a thermal-insulation operation at the time of separation regardless of the predetermined cycle and may provide the updated information to the memory.

Preferably, the information may be updated regardless of the predetermined cycle.

Preferably, when controller receives the input in relation to a thermal-insulation operation from the input part, the controller may determine whether to heat the contents.

Preferably, the controller may determine whether an amount of the contents in the pot main body is not insufficient or insufficient before controlling the heater.

Preferably, the controller may control the heater to raise the temperature of the contents.

Preferably, when the temperature of the contents reaches the target setting temperature, the controller may control the heater to maintain the temperature of the contents at the target setting temperature.

Preferably, from the time when the temperature of the contents reaches the target setting temperature, the thermal-insulation operation and/or a counting of entire thermal-insulation-continuation periods may be initiated.

Preferably, when the pot main body is separated from the supporter in a state in which the thermal-insulation operation is initiated, the controller may stop the thermal-insulation-operation and may stop counting of the entire thermal-insulation-continuation periods.

Preferably, when the pot main body is separated from the supporter in a state in which the thermal-insulation operation is initiated, the controller may update the information in relation to a thermal-insulation operation and provides the updated information to the memory at the time of separation.

Preferably, when the pot main body separated from the supporter is re-coupled to the supporter, and the controller may receive the input in relation to an initiation of driving of the heater from the input part, the controller may re-initiate driving of the heater, and may determine whether to re-initiate the thermal-insulation operation based on the information in relation to a thermal-insulation operation, which is updated and stored in the memory at the time of separation.

Preferably, when the information in relation to a thermal-insulation operation, which is updated and is stored in the memory at the time of separation, indicates that the thermal-insulation operation is set and there is a remaining thermal-insulation-continuation period of the entire thermal-insulation-continuation period, in a state in which amount of the contents is not insufficient, the controller may control the heater to re-initiates the thermal-insulation operation.

Preferably, when the information in relation to a thermal-insulation operation, which is updated and is stored in the memory at the time of separation, indicates that the thermal-insulation operation is set and there is a remaining thermal-insulation-continuation period of the entire thermal-insulation-continuation period, in a state in which amount of the contents is insufficient, the controller may not re-initiate the thermal-insulation operation.

Preferably, when the information in relation to a thermal-insulation operation, which is updated and is stored in the memory at the time of separation, indicates that the thermal-insulation operation is set and there is no remaining thermal-insulation-continuation period of the entire thermal-insulation-continuation period, the controller may not re-initiate the thermal-insulation operation.

Preferably, when the information in relation to a thermal-insulation operation, which is updated and is stored in the memory at the time of separation, indicates that the thermal-insulation operation is not set, the controller may not re-initiate the thermal-insulation operation.

Preferably, when the thermal-insulation operation is re-initiated, counting of a remaining thermal-insulation-continuation period of the entire thermal-insulation-continuation period may be re-initiated after the temperature of the contents reaches the target setting temperature.

Preferably, when driving of the heater is re-initiated, the controller may compare time taken to allow a temperature of the contents to reach the target setting temperature with predetermined reference time.

Preferably, the controller may, based on results of the comparison, determine whether amount of the contents is not insufficient.

Preferably, the controller may determine whether to re-initiate the thermal-insulation operation based on the determination.

Preferably, when time taken to allow a temperature of the contents to reach the target setting temperature exceeds the predetermined reference time, the controller may determine that amount of the contents is not insufficient.

Preferably, the controller may control the heater to re-initiates the thermal-insulation operation based on results of the determination.

Preferably, the controller may when time taken to allow a temperature of the contents to reach the target setting temperature is less than the predetermined reference time, determine that amount of the contents is insufficient, and may not re-initiate the thermal-insulation operation.

Also disclosed herein, but not falling under the claims a method is provided for controlling the operation of an electric pot, comprising the steps of: receiving an input in relation to a thermal-insulation operation of the electric pot, storing information in relation to a thermal-insulation operation in a memory of the electric pot when separating a pot main body of the electric pot from a supporter of the electric pot, checking when recoupling the pot main to the supporter, whether a thermal-insulation operation is set; re initiating the thermal-insulation operation when it is determined that the amount of content in the pot main body is sufficient.

An electric pot may include a controller that controls a heater to perform a thermal-insulation operation based on an input in relation to a thermal-insulation operation and based on information on temperatures, and a memory that receives information in relation to a thermal-insulation operation from the controller and stores the information and that retains the stored information in relation to a thermal-insulation operation regardless of whether a pot main body is attached to or detached from a supporter, thereby having an improved function of continuing a thermal-insulation operation.

The electric pot may include the controller that compares time taken to allow a temperature of contents to reach a target setting temperature with predetermined reference time, and based on results of the comparison, determines whether amount of the contents is not insufficient, and, based on results of the determination, determines whether to re-initiate a thermal-insulation operation, thereby reducing the risk of fires and the risk of burns that may occur when the thermal-insulation operation is performed.

The electric pot may have an improved function of continuing a thermal-insulation operation and, accordingly, may continue a thermal-insulation operation at the time of separation when a user re-couples a supporter and a pot main body after separating the pot main body from the supporter while being capable of reducing the inconvenience of re-setting a thermal-insulation operation by the user, thereby promoting user convenience and improving user satisfaction.

The electric pot may reduce the risk of fires and burns that may occur when a thermal-insulation operation is performed, thereby enhancing credibility and safety of the electric pot.

Detailed effects of the present disclosure are described together with the above-described effects in the detailed description of the disclosure.

### BRIEF DESCRIPTION OF THE DRAWINGS

Embodiments are described in detail with reference to the following drawings, wherein:
FIG. 1 is a cross-sectional view illustrating an electric pot of the related art;
FIG. 2 is a perspective view illustrating an exemplary electric pot;
FIG. 3 is an exploded perspective view illustrating the electric pot in FIG. 2;
FIG. 4 is a cross-sectional view illustrating the supporter in FIG. 2;
FIG. 5 is a cross-sectional view illustrating the pot main body in FIG. 2;
FIG. 6 is a schematic view illustrating a control flow of the electric pot in FIG. 2;
FIG. 7 is a flow chart illustrating a mechanism for continuing a thermal-insulation operation of the electric pot in FIG. 2; and
FIG. 8 is a flow chart illustrating step 700 in FIG. 7.

### DETAILED DESCRIPTION

The above-described objectives, features and advantages are specifically described with reference to the attached drawings hereunder In describing the disclosure, detailed description of known technologies in relation to the disclosure is omitted if it is deemed to make the gist of the present disclosure unnecessarily vague. Below, preferred embodiments of the present disclosure are specifically described with reference to the attached drawings. Throughout the drawings, identical reference numerals denote identical or similar components.

When any component is described as being "at an upper portion (or a lower portion)" of a component, or "on (or under)" a component, any component may be placed on an upper surface (a lower surface) of the component, and an additional component may be interposed between the component and any component placed on (or under) the component.

When a component is described as being "connected," "coupled" or "connected" to another component, the component may be directly connected or able to be connected to another component; however, it is also to be understood that an additional component may be "interposed" between the two components, or the two components may be "connected," "coupled" or "connected" through an additional component.

The terms "A or B", "at least one of A or/and B", or "one or more of A or/and B" as used herein include all possible combinations of items enumerated with them. For example, "A or B", "at least one of A and B", or "at least one of A or B" means (1) including at least one A, (2) including at least one B, or (3) including both at least one A and at least one B.

Below, an exemplary electric pot is described with reference to FIGS. 2 to 6.

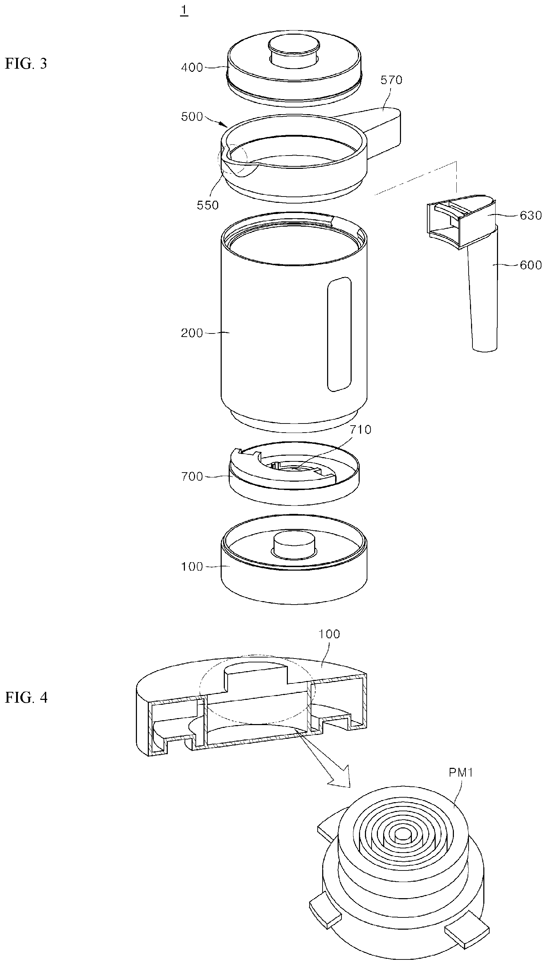

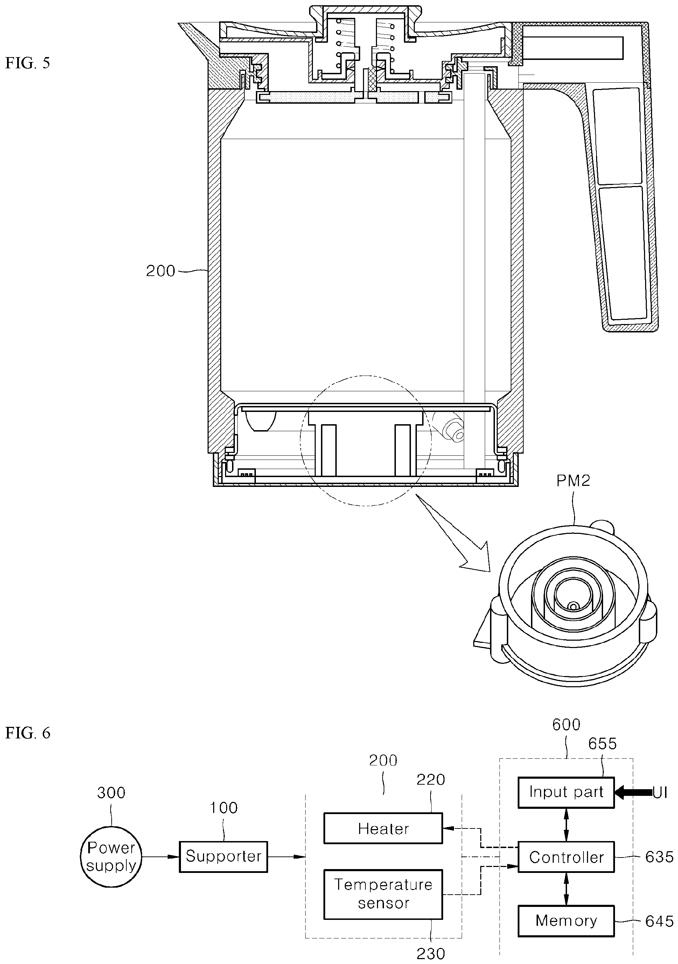

FIG. 2 is a perspective view illustrating an exemplary electric pot, FIG. 3 is an exploded perspective view illustrating the electric pot in FIG. 2, FIG. 4 is a cross-sectional view illustrating the supporter in FIG. 2, FIG. 5 is a cross-sectional view illustrating the pot main body in FIG. 2, and FIG. 6 is a schematic view illustrating a control flow of the electric pot in FIG. 2.

Referring to FIGS. 2 to 6, the exemplary electric pot 1 may include a supporter 100, a pot main body 200, a lid 400, a pot-main-body-upper-end coupler 500, a handle 600, a pot-main-body-lower-end coupler 700.

First, the supporter 100 may be detachably coupled to a lower end of the pot main body 200.

Specifically, the supporter 100 may be coupled to the lower end of the pot main body 200 and may support the pot main body 200. Additionally, the supporter 100 includes a power supply cable that is connectable with an external power supply (i.e., a power supply 300 in FIG. 6), and, accordingly, may receive electric power from the external power supply and may supply the electric power to the pot main body 200.

Further, as illustrated in FIG. 4, the supporter 100 is provided with a first power module (PM1) that protrudes upwards from an upper end of the supporter 100.

Specifically, the first power module (PM1) may have a cylindrical shape that protrudes upwards from a central portion of the upper end of the supporter 100. Additionally, the first power module (PM1) is electrically connected with a second power module (PM2) through a male-female coupling with the second power module (PM2) included in the pot main body 200. Thus an electric connection is provided and the supporter 100 may deliver electric power received from the external power supply to the pot main body 200. The first power module (PM1) may be male-female coupled to the second power module (PM2) and/or may also be electrically coupled to a heater 220 of the pot main body 200.

That is, the supporter 100 and the pot main body 200 may be coupled through the male-female coupling between the first and second power modules (PM1, and PM2).

The pot main body 200 may be detachably coupled to the upper end of the supporter 100, and may contain contents (e.g., water, or drinks and the like) in the pot main body 200.

Specifically, the pot main body 200 has a space that may accommodate contents (e.g., water or drinks and the like), and is provided with a heater 220 that may heat the contents inside the pot main body 200. The pot main body 200 may be provided with a temperature sensor 230 that may measure a temperature of the contents inside the pot main body 200 in real time. Additionally, the pot main body 200 may operate by receiving electric power from the supporter 100 through the coupling with the supporter 100.

Operations of the heater 220 may be controlled by a below-described controller 635.

The temperature sensor 230 may supply information on a measured temperature of contents to the controller 635.

Additionally, the upper end of the pot main body 200 may be opened. Accordingly, the pot-main-body-upper-end coupler 500 may be coupled to the opened upper end of the pot main body 200.

A user may put contents into the pot main body 200 through the opened upper end of the pot main body 200.

Further, the pot main body 200 may include a thermal insulation material and a material that reduces heat transfer to allow contents to maintain their temperature levels. The pot main body 200 may have a cylindrical shape but not be limited.

Furthermore, the pot main body 200, as illustrated in FIG. 5, may be provided with the second power module (PM2) male-female coupled to the first power module (PM1), at the lower end of the pot main body 200.

The second power module (PM2) may be electrically connected with the first power module (PM1) through the male-female coupling with the first power module (PM1) included in the supporter 100, and, through the electric connection, the pot main body 200 may receive electric power from the supporter 100.

The lid 400 may be detachably coupled to an upper end of the pot-main-body-upper-end coupler 500.

Specifically, the lid 400 may be coupled to the upper end of the pot-main-body-upper-end coupler 500 and may cover the opened upper end of the pot main body 200. Additionally, the lid 400 may be coupled to the pot-main-body-upper-end coupler 500 and may allow contents contained in the pot main body 200 to be discharged only through an outlet 550 of the pot-main-body-upper-end coupler 500. The lid 400 is provided with a knob 450, protruding upwards, on an upper surface of the lid 400. Accordingly, the user may attach the lid 400 to and detach the lid 400 from the pot-main-body-upper-end coupler 500, preferably by using the knob 450.

The pot-main-body-upper-end coupler 500 may be coupled between the upper end of the pot main body 200 and the lower end of the lid 400.

Specifically, the pot-main-body-upper-end coupler 500 may be coupled between the pot main body 200 and the lid 400, and upper and lower ends of the pot-main-body-upper-end coupler 500 may all be opened. Accordingly, the user may put contents into the pot main body 200 through the pot-main-body-upper-end coupler 500 the upper and lower ends of which are opened after lifting the lid 400. Further, the pot-main-body-upper-end coupler 500 includes the outlet 550 at one side of the upper end of the pot-main-body-upper-end coupler 500. Accordingly, the contents contained in the pot main body 200 may be discharged outwards through the outlet 550 based on a degree to which the user tilts the pot main body 200, even in a state in which the lid 400 is coupled to the pot-main-body-upper-end coupler 500.

The outlet 550 may communicate with an inner space of the pot main body 200 to discharge the contents contained in the pot main body 200 outwards.

Additionally, the pot-main-body-upper-end coupler 500 may be provided with a handle coupler 570 on one lateral surface of the pot-main-body-upper-end coupler 500, and the handle 600 may be inserted into and coupled to the handle coupler 570.

The handle 600 may be inserted into and coupled to the handle coupler 570.

The handle 600 may be electrically connected to the pot main body 200. Accordingly, electric power supplied from the supporter 100 to the pot main body 200 may also be delivered to the handle 600. Additionally, the handle 600 may have a cylindrical shape that may be readily gripped in the hand of the user.

Further, the handle 600 may be provided with an input part 655, a controller 635, and a memory 645 inside an upper portion 630 (i.e., a portion inserted into and coupled to the handle coupler 570) of the handle 600.

Specifically, the input part 655 may receive an input in relation to a thermal-insulation operation and an input for starting or stopping the driving of the heater 220 (e.g., an input in relation to an initiation or a stop of driving of the heater 220) from the user. Also a heating or operation mode or temperature might be set by use of the input part 655.

The input part 655 may deliver the received input in relation to a thermal-insulation operation and the received input in relation to driving of the heater 220 to the controller 635.

Certainly, the input part 655 may also receive another input in relation to driving of the electric pot from the user in addition to the input in relation to a thermal-insulation operation and input in relation to driving of the heater 220. Detailed description in relation to this is omitted.

The input part 655, for example, may include a touch substrate (not illustrated) to which a metal touch sensor (e.g., a piezo disc) is attached. In this case, the input part 655 may be provided inside the upper portion 630 of the handle while being coupled to an inner side of one surface (e.g., an upper surface) of the handle coupler 570.

Additionally, a touch area may be provided at an outer side of one surface of the handle coupler 570 to which the input part 655 is coupled. In the touch area, a plurality of touch points are provided. Accordingly, when the user presses a touch point, a specific operation corresponding to the touch point may be performed in the electric pot 1.

The touch points may be displayed or illuminated, e.g. by one or more light emitting elements, on the outer side of one surface of the handle coupler 570 through surface processing such as printing treatment or etching and the like such that the user recognizes positions of the touch points.

Certainly, the input part 655 may be implemented at the handle 600 or the pot main body 200 and the like in form of a button and/or in form of a display to which a touch screen is applied or not in form of a touch substrate (without a touch substrate) or in form of a metal touch sensor or by normal buttons.

In the embodiment of the disclosure, the input part 655 including a touch substrate to which a metal touch sensor is attached is provided as an example for convenience of description.

When the user presses a touch point, information on a specific operation is displayed on a display (not illustrated), and the display, for example, may be provided at the handle coupler 570, the handle 600 or the pot main body 200 and the like.

The memory 645 may receive information in relation to a thermal-insulation operation from the controller 635 and may store the information, and may retain the stored information in relation to a thermal-insulation operation regardless of whether the pot main body 200 is attached to and detached from the supporter 100.

The below-described controller 635 may read and write information (i.e., data) stored in the memory 645.

The memory 645, for example, may include an electrically erasable programmable read-only memory (EEPROM) but not be limited.

The controller 635 may control operations of various parts and components in the electric pot 1 (i.e. entire operations of the electric pot 1).

Specifically, the controller 635 may receive an input in relation to a thermal-insulation operation and an input in relation to driving of the heater 220 from the input part 655.

The controller 635 may receive information on a temperature of contents from the temperature sensor 230. Additionally or alternatively, the controller 635 may control the heater 220 based on the received input in relation to a thermal-insulation operation and the received information on a temperature of contents, to perform the thermal-insulation operation. Certainly, the controller 635 may also control the heater 220 based on the input in relation to driving of the heater 220 and the information on a temperature of contents to perform a usual heating operation (i.e., an operation of heating contents).

Further, the controller 635 may receive another input in relation to driving of the electric pot from the input part 655 in addition to the input in relation to a thermal-insulation operation and the input in relation to driving of the heater 220. Detailed description in relation to this is omitted.

The input in relation to a thermal-insulation operation, for example, may include an input regarding whether to initiate a thermal-insulation operation (e.g., a start, a stop, an end and the like of a thermal-insulation operation), an input regarding a target setting temperature and an entire thermal-insulation-continuation period, and the like.

When receiving the input in relation to a thermal-insulation operation from the input part 655, the controller 635 may control the heater 220 to raise a temperature of contents. Additionally, when the temperature of contents reaches a target setting temperature, the controller 635 may control the heater 200 to allow the contents to maintain the target setting temperature (i.e., may initiate the thermal-insulation operation).

When the thermal-insulation operation is initiated, the controller 635 may update information (temperature and time, duration) on the thermal-insulation operation and may provide the updated information to the memory 645 in every predetermined update cycle until the entire thermal-insulation-continuation period is over.

When the supporter 100 and the pot main body 200 are separated, the controller 635 may update the information in relation to a thermal-insulation operation at the time of separation, and may provide the updated information to the memory 645, regardless of the predetermined cycle.

The information in relation to a thermal-insulation operation, for example, may include information on whether to set a thermal-insulation operation, on a target setting temperature, on a remaining thermal-insulation-continuation period of the entire thermal-insulation-continuation period, and the like.

Additionally, from the time when a temperature of contents in the pot main body 200 reaches a target setting temperature, a thermal-insulation operation and/or a counting of an entire thermal-insulation-continuation period may be initiated.

The initiation or start of a thermal-insulation operation may denote an initiation of maintenance of the temperature of contents, which has reached the target setting temperature. The initiation of counting of the entire thermal-insulation-continuation period may denote a gradual reduction in the entire thermal-insulation-continuation period.

For example, when the entire thermal-insulation-continuation period is 30 minutes, the entire thermal-insulation-continuation period may be gradually reduced from 30 minutes to 0 minute after counting is initiated.

Meanwhile, when the pot main body 200 is separated from the supporter 100 in a state in which a thermal-insulation operation is initiated, the controller 635 may stop the thermal-insulation operation and may count down the entire thermal-insulation-continuation period, and, at the time of separation, the controller 635 may update or keep the set information and/or current information in relation to a thermal-insulation operation and may provide the updated information to the memory 645.

When the pot main body 200 separated from the supporter 100 is re-coupled to the supporter 110 and the controller 635 may receive an input in relation to an initiation of driving of the heater 220, i.e., when the user inputs the turning-on of the electric pot 1 from the input part 655. However, the controller 635 may also or alternatively re-initiate driving of the heater 220, and may determine whether to re-initiate a thermal-insulation operation based on the information in relation to a thermal-insulation operation, which is updated and stored in the memory 645 at the time of separation.

Specifically, when the information in relation to a thermal-insulation operation, which is updated and is stored in the memory 645 at the time of separation, indicates that a thermal-insulation operation was set and is still active (i.e. the entire thermal-insulation-continuation period is not counted down to zero) and there is a remaining thermal-insulation-continuation period of the entire thermal-insulation-continuation period, in a state in which amount of the contents is not insufficient (not below a predetermined target amount threshold), the controller 635 may control the heater 220 to re-initiate the thermal-insulation operation to keep or heat up the remaining content to the set target temperature.

When the thermal-insulation operation is re-initiated, the counting of the remaining thermal-insulation-continuation period of the entire thermal-insulation-continuation period may be re-initiated after a temperature of contents reaches the target setting temperature.

When the information in relation to a thermal-insulation operation, which is updated and is stored in the memory 645 at the time of separation, indicates that a thermal-insulation operation is set and there is a remaining thermal-insulation-continuation period of the entire thermal-insulation-continuation period, in a state in which amount of the contents is insufficient, the controller 635 may not re-initiate the thermal-insulation operation. This, facilitates a secure operation of the electric pot and avoids operation of the heater without sufficient content in the pot main body 200 which would result in an overheating of the heater or of the pot main body 200.

When the information in relation to a thermal-insulation operation, which is updated and is stored in the memory 645 at the time of separation, indicates that a thermal-insulation operation is set, and that there is no remaining thermal-insulation-continuation period of the entire thermal-insulation-continuation period, the controller 635 may also not re-initiate the thermal-insulation operation.

Additionally, when the information in relation to a thermal-insulation operation, which is updated and stored in the memory 645 at the time of separation, indicates that a thermal-insulation operation is not set, the controller 635 may not re-initiate the thermal-insulation operation.

The information in relation to a thermal-insulation operation, which is updated and stored in the memory 645 at the time of separation, indicating that a thermal-insulation operation is not set may denote that the thermal-insulation operation is already finished prior to the time of separation, or that the thermal-insulation operation is not initiated in the first place (i.e., that the user does not provide an input in relation to the thermal-insulation operation from the beginning).

Further, concerning the amount of contents, when the driving of the heater 220 is re-initiated, the controller 635 may compare time taken to allow a temperature of contents to reach a target setting temperature with predetermined reference time, and, based on results of the comparison, may determine whether amount of the contents is not insufficient, and, based on the determination, may determine whether to re-initiate the thermal-insulation operation.

Specifically, when time taken to allow a temperature of contents to reach a target setting temperature exceeds predetermined reference time (i.e. is not shorter than a predetermined reference time), the controller 635 may determine that amount of the contents is not insufficient and may control the heater 220 to re-initiate the thermal-insulation operation based on results of the determination,.

When time taken to allow a temperature of contents to reach a target setting temperature is less than predetermined reference time, the controller 635 may determine that amount of the contents is insufficient and may not re-initiate the thermal-insulation operation.

When time taken to allow a temperature of contents to reach a target setting temperature is the same as predetermined reference time, the controller 635 may determine that amount of the contents is not insufficient, but not be limited.

That is, when time taken to allow a temperature of contents to reach a target setting temperature is the same as predetermined reference time, the controller 635 may also determine that the amount of the contents is not insufficient.

In the embodiment of the disclosure, the case, in which the controller 635 determines that amount of the contents is not insufficient when time taken to allow a temperature of the contents to reach a target setting temperature is the same as predetermined reference time, is described as an example for convenience of description.

In the electric pot 1 according to the embodiment of the disclosure, the question of whether amount of the contents is not insufficient is an important factor in determining whether to re-initiate the thermal-insulation operation. Accordingly, when amount of the contents is insufficient, the thermal-insulation operation may not be re-initiated, thereby preventing the pot main body 200 from being overheated and reducing the risk of fires and burns that may be caused by an overheated pot main body.

Detailed description of the above-described function of continuing a thermal-insulation operation is described hereunder.

The pot-main-body-lower-end coupler 700 may be coupled between a lower end of the pot main body 200 and an upper end of the supporter 100.

Specifically, the pot-main-body-lower-end coupler 700 may be coupled between the pot main body 200 and the supporter 100. Additionally, the pot-main-body-lower-end coupler 700 may include an insertion hole 710 at a central portion of the pot-main-body-lower-end coupler 700, and the first power module (PM1) of the supporter 100 may be inserted into and coupled to the insertion hole 710.

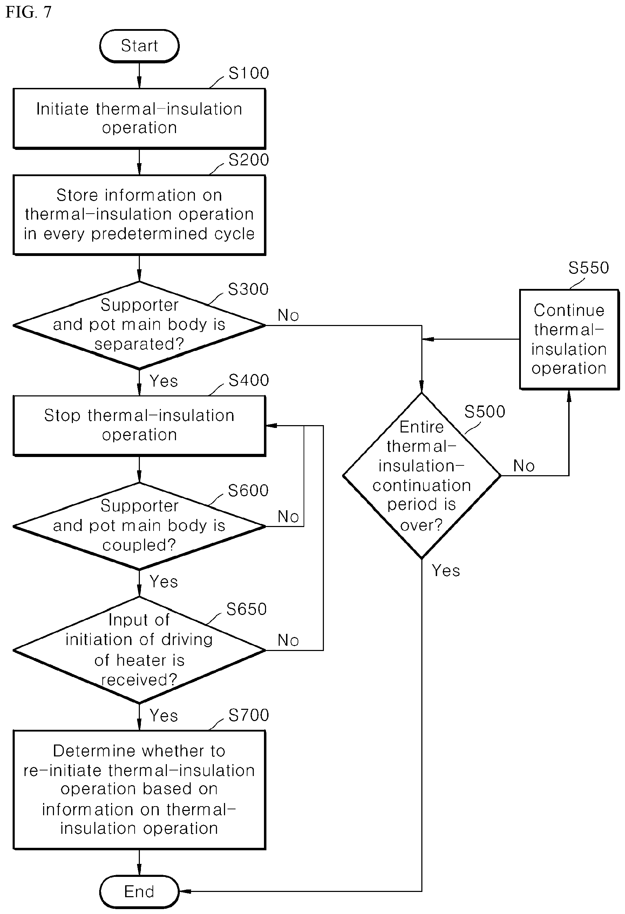

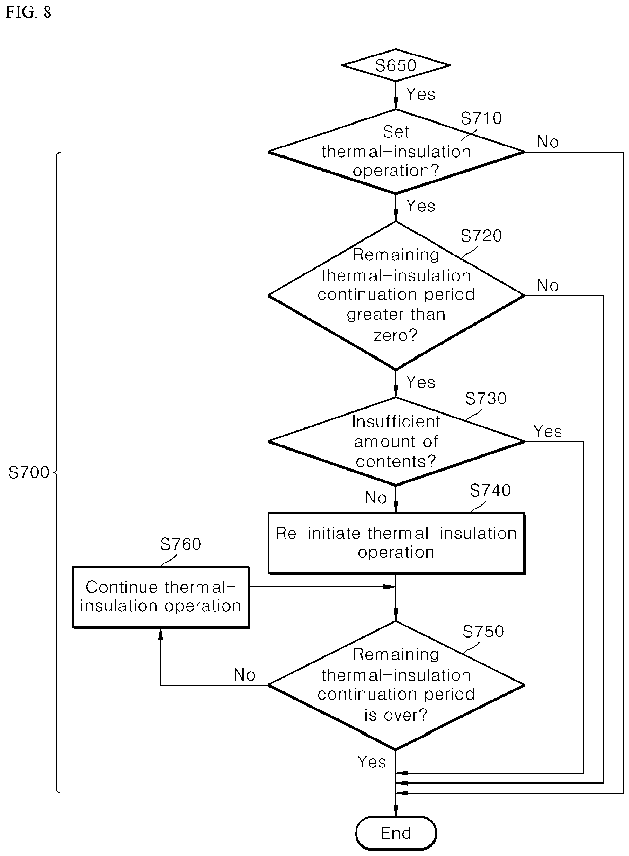

The electric pot 1 according to the embodiment of the disclosure has the above-described configurations and features. Below, a mechanism for continuing a thermal-insulation operation of the electric pot in FIG. 2 is described with reference to FIGS. 7 and 8.

FIG. 7 is a flow chart illustrating a mechanism for continuing a thermal-insulation operation of the electric pot in FIG. 2, and FIG. 8 is a flow chart illustrating step 700 in FIG. 7.

Referring to FIGS. 6 and 7, a thermal-insulation operation is first initiated (S100).

Specifically, a user may provide an input in relation to a thermal-insulation operation to an input part 655, and the input part 655 may provide the input in relation to a thermal-insulation operation received from the user to a controller 635. Additionally, a temperature sensor 230 may measure a temperature of contents accommodated in a pot main body 200 in real time, and may provide information on the measured temperature of contents to the controller 635.

Accordingly, the controller 635 may control a heater 220 and may initiate a thermal-insulation operation based on the received input in relation to a thermal-insulation operation and the received information on the temperature of contents.

When the thermal-insulation operation is initiated (S 100), information in relation to a thermal-insulation operation is stored in every predetermined cycle (S200).

Specifically, when the thermal-insulation operation is initiated, the controller 635 may update information in relation to a thermal-insulation operation and may provide the updated information to a memory 645 in every predetermined cycle until an entire thermal-insulation-continuation period is over.

Certainly, the memory 645 may receive the information in relation to a thermal-insulation operation, updated in every predetermined cycle, from the controller 635, and may store the received information.

The user may separate the pot main body 200 from a supporter 100 to use contents (e.g., hot water) in the pot main body 200 while the thermal-insulation operation is being performed (S300).

Specifically, when the supporter 100 and the pot main body 200 are separated, the pot main body 200 may no longer receive electric power from the supporter 100, and, accordingly, the heater 220 provided in the pot main body 200 and the controller 635 provided in a handle 600 may stop operating. Thus, the thermal-insulation operation may stop (S400).

Certainly, when the supporter 100 and the pot main body 200 are separated, the controller 635 may update information in relation to a thermal-insulation operation and may provide the updated information to the memory 645 at the time of separation regardless of the predetermined cycle.

When the entire thermal-insulation-continuation period is over without separation of the supporter 100 and the pot main body 200 by the user while the thermal-insulation operation is being performed (S500), the thermal-insulation operation may also be completed (i.e., finished). Certainly, when the entire thermal-insulation-continuation period is not over, the thermal-insulation operation may be continued (S550).

After the thermal-insulation operation is stopped (S400), the user may re-couple the supporter 100 and the pot main body 200 (S600).

Specifically, when the supporter 100 and the pot main body 200 are coupled, the pot main body 200 may re-receive electric power from the supporter 100 and, accordingly, the electric power may also be re-supplied to the heater 220 provided in the pot main body 200 and the controller 635 provided in the handle 600.

Certainly, when the user does not re-couple the supporter 100 and the pot main body 200, the thermal-insulation operation remains stopped.

Next, the user may turn on the electric pot 1 after coupling the supporter 100 and the pot main body 200.

Specifically, to turn on the electric pot 1, the user may provide an input in relation to an initiation of driving of the heater 220 to the input part 655. Accordingly, the input part 655 may receive the input in relation to an initiation of driving of the heater 220 from the user and may provide the received input in relation to an initiation of driving of the heater 220 to the controller 635.

When receiving the input of an initiation of driving of the heater 220 (S650), the controller 635 may re-initiate driving of the heater 220 and may determine whether to re-initiate the thermal-insulation operation based on the information in relation to a thermal-insulation operation (S700).

When the user provides no input in relation to an initiation of driving of the heater 220 to the input part 655 although the supporter 100 and the pot main body 200 are coupled, the electric pot 1 keeps turning off. Accordingly, the thermal-insulation operation may remain stopped.

Referring to FIGS. 6 and 8, a mechanism for determining whether to re-initiate the thermal-insulation operation by the controller 635 is illustrated.

First, the controller 635 may confirm whether a thermal-insulation operation is set (S710).

Specifically, when information in relation to a thermal-insulation operation, updated and stored in the memory 645 at the time of separation, indicates that a thermal-insulation operation is not set even though the user re-couples the supporter 100 and the pot main body 200 after separating the pot main body 200 from the supporter 100, the controller 635 may not re-initiate the thermal-insulation operation.

When the information in relation to a thermal-insulation operation indicates that a thermal-insulation operation is set, the controller 635 may confirm that the thermal-insulation operation is set.

When confirming that the thermal-insulation operation is set, the controller 635 may confirm whether there is a remaining thermal-insulation-continuation period of the entire thermal-insulation-continuation period based on the information in relation to a thermal-insulation operation, updated and stored in the memory 645 at the time of separation (S720).

Specifically, when the information in relation to a thermal-insulation operation indicates that a thermal-insulation operation is set, and that there is no remaining thermal-insulation-continuation period of an entire thermal-insulation-continuation period, the controller 635 may not re-initiate the thermal-insulation operation.

When the information in relation to a thermal-insulation operation indicates that a thermal-insulation operation is set, and that there is a remaining thermal-insulation-continuation period of the entire thermal-insulation-continuation period, the controller 635 may confirm that there is the remaining thermal-insulation-continuation period.

When conforming that there is the remaining thermal-insulation-continuation period, the controller 635 may confirm whether contents are left in sufficient numbers and quantities (S730).

Specifically, when the heater 220 is re-driven after the supporter 100 and the pot main body 200 are re-coupled, the controller 635 may compare time taken to allow a temperature of contents to reach a target setting temperature with predetermined reference time, may determine whether amount of the contents is not insufficient based on results of the comparison, and may determine whether to re-initiate the thermal-insulation operation based on results of the determination.

That is, when time taken to allow a temperature of contents to reach a target setting temperature exceeds predetermined reference time, the controller 635 may determine that the amount of the contents is not insufficient, may control the heater 220 to re-initiate the thermal-insulation operation based on results of the determination.

When time taken to allow a temperature of contents to reach a target setting temperature is less than predetermined reference time, the controller 635 may determine that amount of the contents is insufficient, and may not re-initiate the thermal-insulation operation based on results of the determination.

When the thermal-insulation operation is re-initiated through the above-described mechanism regarding the determination on whether to re-initiate the thermal-insulation operation (S740), the controller 635 may perform the thermal-insulation operation during the remaining thermal-insulation-continuation period.

Certainly, when the remaining thermal-insulation-continuation period is over (S750), the thermal-insulation operation may also be completed (i.e., finished). Certainly, when the remaining thermal-insulation-continuation period is not over, the thermal-insulation operation may be continued (S760).

In the electric pot 1 according to the embodiment of the disclosure, as described above, the mechanism for continuing a thermal-insulation operation, which is described above based on various factors, may proceed.

The electric pot 1 according to the embodiment of the disclosure, as described above, has an improved function of continuing a thermal-insulation operation. Accordingly, the thermal-insulation operation at the time of separation may be continued when the user re-couples the supporter and the pot main body after separating the pot main body from the supporter. Thus, a cumbersome procedure of re-setting a thermal-insulation operation by the user is not required, thereby promoting user convenience and improving user satisfaction.

The electric pot 1 according to the embodiment of the disclosure may reduce the risk of fires and burns that may occur when a thermal-insulation operation is performed, thereby enhancing credibility and safety of the electric pot.

## Claims

1. An electric pot, comprising:
a supporter (100) configured to receive electric power from a power supply (300);
a pot main body (200) detachably coupled to an upper end of the supporter (100), the pot main body (200) is configured to be operated by electric power received from the supporter (100), the pot main body (200) includes a heater (220) for heating contents accommodated in the pot main body (200) and a temperature sensor (230) for measuring a temperature of the contents;
an input part (665) configured to receive an input in relation to a temperature-maintenance operation of the contents and/or an input for driving of the heater (220) from a user;
a controller (635) configured to receive the input in relation to a temperature-maintenance operation from the input part (665), and to receive information on a temperature of the contents from the temperature sensor (230), and to control the heater (220) based on the received input in relation to a temperature-maintenance operation and based on the received information on a temperature of the contents to perform the temperature-maintenance operation; and
a memory (645) configured to receive information in relation to a temperature-maintenance operation from the controller (635) and to store the information, and to retain the stored information in relation to a temperature-maintenance operation regardless of whether the pot main body (200) is attached to and detached from the supporter (100),
wherein, when the pot main body (200) is separated from the supporter (100) in a state in which the temperature-maintenance operation is initiated, the controller (635) is configured to stop the temperature-maintenance-operation, to stop counting of the entire temperature-maintenance-continuation period, to update the information in relation to a temperature-maintenance operation, and to provide the updated information to the memory (645) at the time of separation; and
wherein, when the pot main body (200) separated from the supporter (100) is re-coupled to the supporter (100), the controller (635) is configured to determine whether to re-initiate the temperature-maintenance operation based on the updated information.

2. The electric pot of claim 1, further comprising a handle (600) mechanically coupled and electrically connected to the pot main body (200), wherein the input part (665), the controller (635) and the memory (645) are provided on the handle (600).

3. The electric pot of claim 1, wherein the input in relation to a temperature-maintenance operation includes at least one of an input regarding whether to initiate the temperature-maintenance operation, regarding a target setting temperature, and regarding an entire temperature-maintenance-continuation period, and/or the information in relation to a temperature-maintenance operation includes at least one of an information on whether the temperature-maintenance operation is set, on the target setting temperature, and on a remaining temperature-maintenance-continuation period of the entire temperature-maintenance-continuation period.

4. The electric pot of claim 3, wherein the controller (635) is configured to update the information in relation to a temperature-maintenance operation until the entire temperature maintenance-continuation period is over, and to provide the updated information to the memory (645), and
wherein, when the supporter (100) and the pot main body (200) are separated, the controller (635) is configured to update the information in relation to a temperature-maintenance operation at the time of separation and provides the updated information to the memory (645).

5. The electric pot of claim 3 or 4, wherein,
when controller (635) receives the input in relation to a temperature-maintenance operation from the input part (655), the controller (635) is configured to control the heater (220) to raise the temperature of the contents, and
when the temperature of the contents reaches the target setting temperature, the controller (635) is configured to control the heater (220) to maintain the temperature of the contents at the target setting temperature.

6. The electric pot of claim 3, 4 or 5, wherein from the time when the temperature of the contents reaches the target setting temperature, the temperature-maintenance operation and a counting of entire temperature-maintenance-continuation period is initiated.

7. The electric pot of any one of the preceding claims, wherein the controller (635) is configured to determine whether an amount of the contents in the pot main body (200) is not insufficient or insufficient.

8. The electric pot of claim 1, wherein, when the information in relation to a temperature-maintenance operation indicates that the temperature-maintenance operation is set, and there is the remaining temperature-maintenance-continuation period, and the amount of the contents is insufficient, the controller (635) is configured to not re-initiate the thermal-insulation operation.

9. The electric pot of any one of the claims 7 or 8, wherein, when the updated information indicates that the temperature-maintenance operation is set and there is no remaining temperature maintenance-continuation period, the controller (635) is configured to not re-initiate the temperature-maintenance operation.

10. The electric pot of any one of the claims 7 or 8, wherein, when the updated information indicates that the temperature-maintenance operation is not set, the controller (635) is configured to not re-initiate the temperature-maintenance operation.

11. The electric pot of any one of the claims 7 or 8, wherein,
when the pot main body (200) is separated from the supporter (100) in a state in which the temperature maintenance operation is initiated, the controller (635) is configured to stop counting of the entire temperature-maintenance-continuation period, and,
wherein, when the temperature-maintenance operation is re-initiated, counting of a remaining temperature maintenance-continuation period of the entire temperature maintenance-continuation period is re-initiated after the temperature of the contents reaches the target setting temperature.

12. The electric pot of any one of the claims 7 or 8, wherein, when the pot main body (200) is re-coupled to the supporter (100), the input in relation to an initiation of driving of the heater (220) is input to the input part (655), and driving of the heater (220) is re-initiated, the controller (635) is configured to compare time taken to allow a temperature of the contents to reach the target setting temperature with predetermined reference time, and, based on results of the comparison, to determine whether amount of the contents is not insufficient.

13. The electric pot of any one of the claims 9-12, wherein the controller (635) is configured to determine whether to re-initiate the temperature-maintenance operation based on the determination whether amount of the contents is not insufficient.

14. The electric pot of any one of the claims 12 or 13, wherein when time taken to allow a temperature of the contents to reach the target setting temperature exceeds the predetermined reference time, the controller (635) is configured to determine that amount of the contents is not insufficient, and, to control the heater (220) to re-initiates the temperature-maintenance operation based on results of the determination.

15. The electric pot of any one of the claims 12, 13 or 14, wherein when time taken to allow a temperature of the contents to reach the target setting temperature is less than the predetermined reference time, the controller (635) is configured to determine that amount of the contents is insufficient, and is configured to not re-initiate the temperature-maintenance operation.

## Patentansprüche

1. Elektrischer Topf, der Folgendes umfasst:
einen Träger (100), der so konfiguriert ist, dass er von einem Netzteil (300) elektrische Leistung erhält;
einen Topfhauptkörper (200), der mit einem oberen Ende des Trägers (100) lösbar gekoppelt ist, wobei der Topfhauptkörper (200) so konfiguriert ist, dass er durch elektrische Leistung betrieben wird, die vom Träger (100) erhalten wird, wobei der Topfhauptkörper (200) eine Heizvorrichtung (220) zum Erhitzen von Inhalt, der im Topfhauptkörper (200) aufgenommen ist, und einen Temperatursensor (230) zum Messen einer Temperatur des Inhalts umfasst;
ein Eingabeteil (665), das konfiguriert ist, eine Eingabe in Bezug auf einen Temperaturhaltebetrieb des Inhalts und/oder eine Eingabe zum Ansteuern der Heizvorrichtung (220) von einem Benutzer zu erhalten;
eine Steuereinheit (635), die konfiguriert ist, die Eingabe in Bezug auf einen Temperaturhaltebetrieb vom Eingabeteil (665) zu erhalten, und Informationen bezüglich einer Temperatur des Inhalts vom Temperatursensor (230) zu erhalten, und die Heizvorrichtung (220) auf der Basis der erhaltenen Eingabe in Bezug auf einen Temperaturhaltebetrieb und auf der Basis der empfangenen Informationen bezüglich einer Temperatur des Inhalts zu steuern, um den Temperaturhaltebetrieb auszuführen; und
einen Speicher (645), der so konfiguriert ist, dass er Informationen in Bezug auf einen Temperaturhaltebetrieb von der Steuereinheit (635) erhält und die Informationen speichert, und die gespeicherten Informationen in Bezug auf einen Temperaturhaltebetrieb unabhängig davon, ob der Topfhauptkörper (200) am Träger (100) befestigt oder von diesem gelöst ist, behält,
wobei dann, wenn der Topfhauptkörper (200) in einem Zustand, in dem der Temperaturhaltebetrieb gestartet ist, vom Träger (100) getrennt ist, die Steuereinheit (635) konfiguriert ist, den Temperaturhaltebetrieb zu stoppen, das Zählen der gesamten Zeit zum fortgesetzten Halten der Temperatur zu stoppen, die Informationen in Bezug auf einen Temperaturhaltebetrieb zu aktualisieren und die aktualisierten Informationen zum Zeitpunkt der Trennung für den Speicher (645) bereitzustellen; und
wobei dann, wenn der Topfhauptkörper (200), der vom Träger (100) getrennt ist, erneut mit dem Träger (100) gekoppelt wird, die Steuereinheit (635) konfiguriert ist, auf der Basis der aktualisierten Informationen festzustellen, ob der Temperaturhaltebetrieb erneut gestartet werden soll.

2. Elektrischer Topf nach Anspruch 1, der ferner einen Griff (600) umfasst, der mit dem Topfhauptkörper (200) mechanisch gekoppelt und elektrisch verbunden ist, wobei das Eingabeteil (665), die Steuereinheit (635) und der Speicher (645) am Griff (600) vorgesehen sind.

3. Elektrischer Topf nach Anspruch 1, wobei die Eingabe in Bezug auf einen Temperaturhaltebetrieb eine Eingabe in Bezug darauf, ob der Temperaturhaltebetrieb gestartet werden soll, in Bezug auf eine eingestellte Solltemperatur und/oder in Bezug auf eine gesamte Zeit zum fortgesetzten Halten der Temperatur umfasst, und/oder wobei die Informationen in Bezug auf einen Temperaturhaltebetrieb Informationen, ob der Temperaturhaltebetrieb eingestellt ist, bezüglich der eingestellten Solltemperatur und/oder bezüglich einer verbleibenden Zeit zum fortgesetzten Halten der Temperatur von der gesamten Zeit zum fortgesetzten Halten der Temperatur umfassen.

4. Elektrischer Topf nach Anspruch 3, wobei die Steuereinheit (635) konfiguriert ist, die Informationen in Bezug auf einen Temperaturhaltebetrieb zu aktualisieren, bis die gesamte Zeit zum fortgesetzten Halten der Temperatur vorüber ist, und die aktualisierten Informationen für den Speicher (645) bereitzustellen, und
wobei dann, wenn der Träger (100) und der Topfhauptkörper (200) getrennt sind, die Steuereinheit (635) konfiguriert ist, die Informationen in Bezug auf einen Temperaturhaltebetrieb zum Zeitpunkt der Trennung zu aktualisieren und die aktualisierten Informationen für den Speicher (645) bereitzustellen.

5. Elektrischer Topf nach Anspruch 3 oder 4, wobei
dann, wenn die Steuereinheit (635) die Eingabe in Bezug auf einen Temperaturhaltebetrieb vom Eingabeteil (655) erhält, die Steuereinheit (635) konfiguriert ist, die Heizvorrichtung (220) zu steuern, die Temperatur des Inhalts zu erhöhen, und
dann, wenn die Temperatur des Inhalts die eingestellte Solltemperatur erreicht, die Steuereinheit (635) konfiguriert ist, die Heizvorrichtung (220) zu steuern, die Temperatur des Inhalts auf der eingestellten Solltemperatur zu halten.

6. Elektrischer Topf nach Anspruch 3, 4 oder 5, wobei ab dem Zeitpunkt, zu dem die Temperatur des Inhalts die eingestellte Solltemperatur erreicht, der Temperaturhaltebetrieb und das Zählen der gesamten Zeit zum fortgesetzten Halten der Temperatur gestartet wird.

7. Elektrischer Topf nach einem der vorhergehenden Ansprüche, wobei die Steuereinheit (635) konfiguriert ist, festzustellen, ob eine Menge des Inhalts im Topfhauptkörper (200) nicht zu wenig oder zu wenig ist.

8. Elektrischer Topf nach Anspruch 1, wobei dann, wenn die Informationen in Bezug auf einen Temperaturhaltebetrieb anzeigen, dass der Temperaturhaltebetrieb eingestellt ist, und wenn es eine verbleibende Zeit zum fortgesetzten Halten der Temperatur gibt, und wenn die Menge des Inhalts zu wenig ist, die Steuereinheit (635) konfiguriert ist, den Wärmeisolierungsbetrieb nicht erneut zu starten.

9. Elektrischer Topf nach einem der Ansprüche 7 oder 8, wobei dann, wenn die aktualisierten Informationen anzeigen, dass der Temperaturhaltebetrieb eingestellt ist und es keine verbleibende Zeit zum fortgesetzten Halten der Temperatur gibt, die Steuereinheit (635) konfiguriert ist, den Temperaturhaltebetrieb nicht erneut zu starten.

10. Elektrischer Topf nach einem der Ansprüche 7 oder 8, wobei dann, wenn die aktualisierten Informationen anzeigen, dass der Temperaturhaltebetrieb nicht eingestellt ist, die Steuereinheit (635) konfiguriert ist, den Temperaturhaltebetrieb nicht erneut zu starten.

11. Elektrischer Topf nach einem der Ansprüche 7 oder 8, wobei
dann, wenn der Topfhauptkörper (200) vom Träger (100) in einem Zustand getrennt ist, in dem der Temperaturhaltebetrieb gestartet ist, die Steuereinheit (635) konfiguriert ist, das Zählen der gesamten Zeit zum fortgesetzten Halten der Temperatur zu stoppen, und
wobei dann, wenn der Temperaturhaltebetrieb erneut gestartet wird, das Zählen einer verbleibenden Zeit zum fortgesetzten Halten der Temperatur der gesamten Zeit zum fortgesetzten Halten der Temperatur erneut gestartet wird, nachdem die Temperatur des Inhalts die eingestellte Solltemperatur erreicht hat.

12. Elektrischer Topf nach einem der Ansprüche 7 oder 8, wobei dann, wenn der Topfhauptkörper (200) erneut mit dem Träger (100) gekoppelt wird, die Eingabe in Bezug auf einen Start einer Ansteuerung der Heizvorrichtung (220) am Eingabeteil (655) eingegeben wird und das Ansteuern der Heizvorrichtung (220) erneut gestartet wird, die Steuereinheit (635) konfiguriert ist, die Zeit, die erforderlich ist, bis eine Temperatur des Inhalts die eingestellte Solltemperatur erreicht, mit einer zuvor festgelegten Referenzzeit zu vergleichen, und auf der Basis der Ergebnisse des Vergleichs festzustellen, ob die Menge des Inhalts nicht zu wenig ist.

13. Elektrischer Topf nach einem der Ansprüche 9-12, wobei die Steuereinheit (635) konfiguriert ist, basierend auf der Feststellung, ob eine Menge des Inhalts nicht zu wenig ist, festzustellen, ob der Temperaturhaltebetrieb erneut gestartet werden soll.

14. Elektrischer Topf nach einem der Ansprüche 12 oder 13, wobei dann, wenn die Zeit, die erforderlich ist, damit eine Temperatur des Inhalts die eingestellte Solltemperatur erreicht, die zuvor festgelegte Referenzzeit überschreitet, die Steuereinheit (635) konfiguriert ist, festzustellen, dass die Menge des Inhalts nicht zu wenig ist, und die Heizvorrichtung (220) auf der Basis der Ergebnisse der Feststellung zu steuern, den Temperaturhaltebetrieb erneut zu starten.

15. Elektrischer Topf nach einem der Ansprüche 12, 13 oder 14, wobei dann, wenn die Zeit, die erforderlich ist, damit eine Temperatur des Inhalts die eingestellte Solltemperatur erreicht, kürzer als die zuvor festgelegte Referenzzeit ist, die Steuereinheit (635) konfiguriert ist, festzustellen, dass die Menge des Inhalts zu wenig ist, und konfiguriert ist, den Temperaturhaltebetrieb nicht erneut zu starten.

## Revendications

1. Bouilloire électrique, comportant :
un élément de support (100) configuré pour recevoir du courant électrique provenant d'une alimentation (300) ;
un corps principal de bouilloire (200) couplé de manière détachable à une extrémité supérieure de l'élément de support (100), le corps principal de bouilloire (200) étant configuré pour être mis en marche par du courant électrique reçu de l'élément de support (100), le corps principal de bouilloire (200) incluant un élément chauffant (220) pour chauffer un contenu reçu dans le corps principal de bouilloire (200) et un capteur de température (230) pour mesurer une température du contenu ;
une partie d'entrée (665) configurée pour recevoir une entrée se rapportant à une opération de maintien en température du contenu et/ou une entrée pour piloter l'élément chauffant (220) à partir d'un utilisateur ;
une commande (635) configurée pour recevoir l'entrée se rapportant à une opération de maintien en température provenant de la partie d'entrée (635), et pour recevoir des informations sur une température du contenu provenant du capteur de température (230), et pour commander l'élément chauffant (220) sur la base de l'entrée reçue se rapportant à une opération de maintien en température et sur la base des informations reçues sur une température du contenu pour exécuter l'opération de maintien en température ; et
une mémoire (645) configurée pour recevoir des informations se rapportant à une opération de maintien en température provenant de la commande (635) et pour stocker les informations, et pour conserver les informations stockées se rapportant à une opération de maintien en température que le corps principal de bouilloire (200) soit attaché à l'élément de support (100) ou détaché de celui-ci,
dans laquelle, lorsque le corps principal de bouilloire (200) est séparé de l'élément de support (100) dans un état dans lequel l'opération de maintien en température est initiée, la commande (635) est configurée pour arrêter l'opération de maintien en température, pour arrêter le comptage de la période complète de poursuite de maintien en température, pour mettre à jour les informations en rapport avec une opération de maintien en température et pour fournir les informations mises à jour à la mémoire (645) au moment de la séparation ; et
dans laquelle, lorsque le corps principal de bouilloire (200) séparé de l'élément de support (100) est re-couplé à l'élément de support (100), la commande (635) est configurée pour déterminer s'il faut réinitier l'opération de maintien en température sur la base des informations mises à jour.

2. Bouilloire électrique selon la revendication 1, comportant en outre une poignée (600) mécaniquement couplée et électriquement reliée au corps principal de bouilloire (200), dans laquelle la partie d'entrée (665), la commande (635) et la mémoire (645) sont agencées sur la poignée (600).

3. Bouilloire électrique selon la revendication 1, dans laquelle l'entrée se rapportant à une opération de maintien en température inclut au moins un élément parmi une entrée déterminant s'il faut initier l'opération de maintien en température, une entrée concernant une température de consigne cible et une entrée concernant une période complète de poursuite de maintien en température, et/ou les informations se rapportant à une opération de maintien en température incluent au moins un élément parmi une information indiquant si l'opération de maintien en température est paramétrée, une information sur la température de consigne cible et une information sur une période restante de poursuite de maintien en température de la période complète de poursuite de maintien en température.

4. Bouilloire électrique selon la revendication 3, dans laquelle la commande (635) est configurée pour mettre à jour les informations se rapportant à une opération de maintien en température jusqu'à ce que la période complète de poursuite de maintien en température soit terminée, et pour fournir les informations mises à jour à la mémoire (645), et
dans laquelle, lorsque l'élément de support (100) et le corps principal de bouilloire (200) sont séparés, la commande (635) est configurée pour mettre à jour les informations se rapportant à une opération de maintien en température au moment de la séparation et fournit les informations mises à jour à la mémoire (645).

5. Bouilloire électrique selon la revendication 3 ou 4, dans laquelle
lorsque la commande (635) reçoit l'entrée se rapportant à une opération de maintien en température provenant de la partie d'entrée (655), la commande (635) est configurée pour commander à l'élément chauffant (220) d'augmenter la température du contenu, et
lorsque la température du contenu atteint la température de consigne cible, la commande (635) est configurée pour commander à l'élément chauffant (220) de maintenir la température du contenu à la température de consigne cible.

6. Bouilloire électrique selon la revendication 3, 4 ou 5, dans laquelle à partir de l'instant où la température du contenu atteint la température de consigne cible, l'opération de maintien en température et un comptage de la période complète de poursuite de maintien en température sont initiés.

7. Bouilloire électrique selon l'une quelconque des revendications précédentes, dans laquelle la commande (635) est configurée pour déterminer si une quantité du contenu dans le corps principal de bouilloire (200) n'est pas insuffisante ou est insuffisante.

8. Bouilloire électrique selon la revendication 1, dans laquelle, lorsque les informations en lien avec une opération de maintien en température indiquent que l'opération de maintien en température est paramétrée, et qu'il y a la période restante de poursuite de maintien en température, et que la quantité du contenu est insuffisante, la commande (635) est configurée pour ne pas réinitier l'opération d'isolation thermique.

9. Bouilloire électrique selon l'une quelconque des revendications 7 ou 8, dans laquelle, lorsque les informations mises à jour indiquent que l'opération de maintien en température est paramétrée et qu'il n'y a aucune période restante de poursuite de maintien en température, la commande (635) est configurée pour ne pas réinitier l'opération de maintien en température.

10. Bouilloire électrique selon l'une quelconque des revendications 7 ou 8, dans laquelle, lorsque les informations mises à jour indiquent que l'opération de maintien en température n'est pas paramétrée, la commande (635) est configurée pour ne pas réinitier l'opération de maintien en température.

11. Bouilloire électrique selon l'une quelconque des revendications 7 ou 8, dans laquelle
lorsque le corps principal de bouilloire (200) est séparé de l'élément de support (100) dans un état dans lequel l'opération de maintien en température est initiée, la commande (635) est configurée pour arrêter le comptage de la période complète de poursuite de maintien en température, et
dans lequel, lorsque l'opération de maintien en température est réinitiée, le comptage d'une période restante de poursuite de maintien en température de la période complète de poursuite de maintien en température est réinitié après que la température du contenu a atteint la température de consigne cible.

12. Bouilloire électrique selon l'une quelconque des revendications 7 ou 8, dans laquelle, lorsque le corps principal de bouilloire (200) est re-couplé à l'élément de support (200), l'entrée se rapportant à une initiation du pilotage de l'élément chauffant (200) est entrée dans la partie d'entrée (655) et le pilotage de l'élément chauffant (220) est réinitié, la commande (635) est configurée pour comparer un temps requis pour permettre à une température du contenu d'atteindre la température de consigne cible avec un temps de référence prédéterminé et, sur la base de résultats de la comparaison, pour déterminer si la quantité du contenu n'est pas insuffisante.

13. Bouilloire électrique selon l'une quelconque des revendications 9 à 12, dans laquelle la commande (635) est configurée pour déterminer s'il faut réinitier l'opération de maintien en température sur la base de la détermination de si la quantité du contenu n'est pas insuffisante.

14. Bouilloire électrique selon l'une quelconque des revendications 12 ou 13, dans laquelle lorsque le temps requis pour laisser une température du contenu atteindre la température de consigne cible dépasse le temps de référence prédéterminé, la commande (635) est configurée pour déterminer que la quantité du contenu n'est pas insuffisante et, pour commander à l'élément chauffant (220) de réinitier l'opération de maintien en température sur la base de résultats de la détermination.

15. Bouilloire électrique selon l'une quelconque des revendications 12, 13 ou 14, dans laquelle lorsque le temps requis pour laisser une température du contenu atteindre la température de consigne cible est inférieur au temps de référence prédéterminé, la commande (635) est configurée pour déterminer que la quantité du contenu est insuffisante et est configurée pour ne pas réinitier l'opération de maintien en température.
